# EUROPÄISCHE PATENTSCHRIFT

(11) **EP 3 215 342 B1**
(45) Veröffentlichungstag und Bekanntmachung des Hinweises auf die Patenterteilung: **07.11.2018**
(21) Anmeldenummer: 15766515.9
(22) Anmeldetag: 22.09.2015
(51) Int. Cl.: B29C 45/16

(54) **KOINJEKTIONSDÜSE MIT INTEGRIERTER RÜCKFLUSSSPERRE**
CO-INJECTION NOZZLE COMPRISING INTEGRATED BACK-FLOW BARRIER
BUSE DE CO-INJECTION À CLAPET ANTI-RETOUR INTÉGRÉ

(30) Priorität: 06.11.2014 CH 17142014
(43) Veröffentlichungstag der Anmeldung: 13.09.2017
(73) Patentinhaber: Fostag Formenbau AG, 8260 Stein am Rhein (CH)
(72) Erfinder: MÜHLEMANN, Rolf, CH-8255 Schlattingen (CH)
(74) Vertreter: Schneider Feldmann AG Patent- und Markenanwälte
(86) Internationale Anmeldenummer: PCT/EP2015/071667
(87) Internationale Veröffentlichungsnummer: WO 2016/071035

(56) Entgegenhaltungen:
- JP-A- H07 156 202
- US-A1- 2013 207 289
- BRAUN P: "ZWEI KOMPONENTEN ZENTRAL ANGESPRITZT", PLASTVERARBEITER, HUETHIG GMBH, HEIDELBERG, DE, Bd. 49, Nr. 10, 1. Oktober 1998 (1998-10-01), XP000933347, ISSN: 0032-1338

## Beschreibung

### Technisches Gebiet

Die Erfindung betrifft eine Koinjektionsdüse für eine Heisskanal-Koinjektionseinrichtung einer Spritzgussvorrichtung zur Herstellung von mehrschichtigen Spritzgusserzeugnissen, insbesondere Spritzgusserzeugnisse mit einer Barriere- oder Sperrschicht. Solche Koinjektionsdüsen umfassen einen ringförmigen inneren Schmelzekanal, der in der stromab gerichteten Hälfte der Koinjektionsdüse durch die zentrale Bohrung und die Ventilnadel ausgebildet und fluidisch mit einem ersten Schmelzezuführungskanal verbunden ist; einen ringförmigen mittleren Schmelzekanal, der fluidisch mit einem zweiten Schmelzezuführungskanal verbunden ist und sich um den ringförmigen inneren Schmelzkanal erstreckt; und einen ringförmigen äusseren Schmelzekanal, der fluidisch mit dem ersten Schmelzezuführungskanal verbunden ist und sich um den ringförmigen mittleren Schmelzkanal erstreckt. Der innere, mittlere und äussere Schmelzekanal sind im Bereich der Düsenspitze zur Bildung eines konzentrisch geschichteten Schmelzestrom fluidisch zusammengeführt.

### Technischer Hintergrund

Koinjektionsdüsen resp. Heisskanal-Koinjektionseinrichtungen für Spritzgussvorrichtungen, mit denen zwei unterschiedliche Schmelzen gleichzeitig durch eine Düsenmündung in einen Formhohlraum bzw. Kavität einer Spritzgussform gespritzt werden können, sind seit langem bekannt (z.B. US4657496 oder JP H07 156202 A). Die meisten älteren Koinjektionsdüsen weisen zwei separate Kanäle für die beiden Schmelzen auf, die derart angeordnet sind, dass aus der Düsenmündung eine zweischichtiger Schmelzestrom austritt.

Für die Herstellung von mehrschichtigen Spritzgusserzeugnissen, insbesondere Schutzbehälter für Lebensmittel, pharmazeutische Produkte, Blutproben, etc., mit einer sogenannten Barriere- oder Sperrschicht wird allerdings eine spezielle Art von Koinjektionsdüsen verwendet, bei welcher der Austrittsstrom dreischichtig und konzentrisch ausgebildet ist, wobei die Sperrschicht dabei die mittlere Schicht bildet.

Bereits aus WO8100231 ist eine solche Koinjektionsdüse bekannt, welche drei separate Schmelzeströme in einem dreischichtigen, konzentrischen Schmelzeaustrittsstrom kombiniert. Bei dieser Düse kann mit einer in einer zentralen Bohrung der Düse angeordneten Ventilnadel der innere Schmelzestrom reguliert werden.

Bei weiteren Koinjektionsdüsen dieses Grundprinzips wird eine erste Schmelze ausserhalb oder innerhalb der Koinjektionsdüse in zwei Ströme aufgeteilt, welche anschliessend eine innere und äussere Schicht des konzentrischen Austrittstroms bilden. Eine zweite Schmelze wird zwischen die beiden Schichten geführt und bildet die mittlere Sperrschicht. Die drei Schichten werden dabei ausserhalb oder innerhalb der Koinjektionsdüse zu einem mehrschichtigen Schmelzestrom kombiniert und als konzentrischen Austrittsstrom in den Formhohlraum gespritzt, wobei ein mehrschichtiges Spritzgusserzeugnis mit einer beidseitig abgedeckten Barriereschicht entsteht. Je nach Ausführungsart der Koinjektionsdüse oder der Koinjektionseinrichtung können die Schmelzen der unterschiedlichen Schichten reguliert werden. Um die Barriereschicht vollständig in der Schmelze für die äussere und innere Schicht einzuschliessen, wird jeweils am Anfang und am Ende eines Spritzgussvorgangs nur die Schmelze für die äussere und/oder innere Schicht ohne Schmelze für die mittlere Schicht eingespritzt.

EP0929390 zeigt eine Koinjektionsdüse, bei welcher die drei Schmelzeschichten in einer der Düse stromauf vorgeordneten Kombinationseinheit kombiniert werden und anschliessend entlang einem länglichen, rohrförmigen Durchflusskanal der Düse bis zur Düsenmündung geführt werden. Der rohrförmige Druchflusskanal wird durch eine zentrale Bohrung im Düsenkörper und einer darin angeordneten Ventilnadel gebildet. Mittels der Ventilnadel kann der Fluss der inneren Schmelzeschicht in der Kombinationseinheit beeinflusst werden. Zudem wird der Fluss der einzelnen Schmelzeströme über die Zuführungseinheit geregelt.

EP0911134 beschreibt eine Koinjektionseinheit, bei welcher drei Schmelzeströme durch jeweils eine Schmelzezuführungsöffnung in die Koinjektionsdüse geführt werden und im Bereich der Düsenspitze kurz vor der Düsenmündung zu einem konzentrisch geschichteten Schmelzestrom kombiniert werden. Die Schmelze für die innere Schicht wird in einem ringförmigen inneren Schmelzekanal, der durch eine zentrale Bohrung und eine Ventilnadel ausgebildet ist geführt. Die Schmelze für die mittlere Schicht wird in einem ringförmigen mittleren Schmelzekanal geführt, der sich um den ringförmigen inneren Schmelzkanal erstreckt. Die Schmelze für die äussere Schicht wird in einem ringförmigen äusseren Schmelzekanal geführt, der sich um den ringförmigen mittleren Schmelzkanal erstreckt. Mittels der Ventilnadel kann der innere und mittlere Schmelzekanal bei offenem äusseren Schmelzekanal geschlossen werden.

Aus WO0054955 ist eine Koinjektionsdüse bekannt, bei welcher die beiden Schmelzen für die innere und mittlere Schicht stromauf ausserhalb der Koinjektionsdüse in einer ersten Kombinationseinheit kombiniert werden und anschliessend zusammen entlang einer inneren zentralen Schmelzekanal zur Düsenmündung geführt werden, um einen möglichst stabilen kombinierten Schmelzestrom zu erhalten. Die Schmelze für die äussere Schicht wird im Bereich der Düsenspitze mit dem bereits kombinierten zentralen Schmelzestrom kombiniert und so in den Formhohlraum gespritzt.

Aus WO04103668 ist eine Koinjektionseinrichtung bekannt, bei welcher ein erster Schmelzestrom innerhalb einer Koinjektionsdüse in zwei Ströme für die innere und äussere Schicht aufgeteilt wird. Die aufgeteilten Ströme werden in einer Kombinationskammer mit der zweiten Schmelze für die mittlere Schicht stromauf von einem länglichen zentralen Schmelzekanal zu einem konzentrisch geschichteten Schmelzestrom kombiniert, welcher anschliessend über den zentralen Schmelzekanal entlang einer Ventilnadel zur Düsenmündung geführt wird. Die Kombinationskammer ist derart konfiguriert, dass die Bildung der mittleren Schicht mit einer minimalen Materialmenge aus den beiden Strömen der ersten Schmelze unter Vermeidung Strömungsinstabilitäten reguliert werden kann.

EP2054209 zeigt eine Koinjektionseinrichtung, bei welcher eine erste Schmelze stromauf vor der Zuführung in die Koinjektionsdüse in zwei Ströme aufgeteilt wird. Die aufgeteilten Ströme werden anschliessend im Bereich der Düsenspitze mit der zweiten Schmelze zusammengeführt, um einen mehrschichtigen Schmelzestrom zu bilden.

WO11006999 beschreibt eine Koinjektionseinrichtung, bei welcher zwei Schmelzen seitlich einer Koinjektionsdüse zugeführt werden, wobei die erste Schmelze innerhalb der Koinjektionsdüse in je einen Strom für die innere und äussere Schicht aufgeteilt wird. Die Ströme werden in der Düsenspitze kombiniert. Die Koinjektionsdüse weist eine bewegbare Nadel und eine bewegbare Hülse zur Regulierung der einzelnen Schmelzeströme auf.

Aus WO12037682 ist eine Koinjektionsdüse bekannt, bei welcher ein Teil eines ersten Schmelzestrom über seitliche Tunnelkanäle durch einen ringförmigen zweiten Schmelzestrom geleitet wird. Die drei Schmelzeströme werden im Bereich der Spitze zu einem mehrschichtigen Schmelzestrom kombiniert. Der Zufluss des mittleren Schmelzestroms kann mit einer bewegbaren Hülse reguliert werden.

Das Material für die Barriereschicht ist teuer, weshalb es in mehrschichtigen Spritzgusserzeugnissen bevorzugt als möglichst dünne Schicht vorliegt. Auch wird am Anfang und am Schluss des jeweiligen Spritzgusszyklus lediglich die erste Schmelze eingespritzt und der Schmelzestrom der zweiten Schmelze, welche die Barriereschicht bildet, wird unterbrochen, um ein Spritzgusserzeugnis mit vollständig umkapselter Barriereschicht zu erhalten. Eine exakte Regulierung der zweiten Schmelze ist daher zur Herstellung von Spritzgusserzeugnisse mit sehr dünnen Barriereschichten wünschenswert.

Ein Problem, welches bei bekannten Koinjektionsdüsen auftreten kann, ist jedoch das Rückfliessen der zweiten Schmelze im mittleren Schmelzekanal. Findet ein solches Rückfliessen der zweiten Schmelze statt, führt dies zu einer ungenauen Zuführungen der zweiten Schmelze im nächsten Spritzgusszyklus und somit zu ungenauen oder fehlerhaften Barriereschichten der Spritzgusserzeugnissen.

Bei den Koinjektionsdüsen aus WO11006999 und WO12037682 kann ein solches Rückfliesen mittels einer bewegbaren Hülse, die den ringförmigen mittleren Schmelzekanal verschliessen kann, verhindert werden. Allerdings ist der Aufbau einer solchen Koinjektionsdüse und der Koinjektionseinrichtung aufgrund des zusätzlichen bewegbaren Teils in der Koinjektionsdüse aufwendig und teuer.

Andere Koinjektionseinrichtung, wie beispielsweise aus WO0054955 oder EP0901896 bekannt, weisen eine Rückfluss-Steuerventil auf, welches ausserhalb der Koinjektionsdüse angeordnet ist. EP0901896 betrifft allerdings eine Koinjektionsdüse mit einem nur zweischichtigen konzentrischen Schmelzeaustrittsstrom, bei welcher ein Rückfliessen nicht so gravierend ist, da sie nicht zur Herstellung von Spritzgusserzeugnissen mit Barriereschicht geeignet ist. Bei WO0054955 ist das Rückfluss-Steuerventil stromauf von der Koinjektionsdüse in einer Kombinationseinheit zwischen einer vorderen Schmelzeverteilerplatte für die erste Schmelze und einer hinteren Schmelzeverteilerplatte für die zweite Schmelze angeordnet.

Die bekannten Koinjektionsdüsen mit Rückfluss-Steuerventil - sei es über eine bewegbare Hülse oder über ein vorgeschaltetes Rückfluss-Steuerventil - weisen einen komplexen vielteiligen Aufbau auf, was sich direkt in den hohen Herstellungs- und Wartungskosten niederschlägt.

Bei allen bekannten Koinjektionsdüsen mit dreischichtig und konzentrisch ausgebildetem Austrittsstrom findet die Aufteilung der ersten Schmelze und die Kombination der Schmelzen zu einem geschichteten Strom zumindest teilweise ausserhalb der Koinjektionsdüse statt, oder sie weisen einen mehrteiligen Aufbau mit vielen komplexen Hauptbestandteilen auf. Dies ist insbesondere dann der Fall, wenn zusätzlich ein Rückfluss-Steuerventil für die zweite Schmelze vorgesehen ist.

### Darstellung der Erfindung

Eine Aufgabe der Erfindung ist es, eine einfach und kompakt aufgebaute Koinjektionsdüse zur Herstellung von mehrschichtigen Spritzgusserzeugnissen mit Barriereschicht anzugeben, bei welcher ein Rückfliessen der Schmelze für die Barriereschicht vermieden wird und welche kostengünstiger hergestellt und gewartet werden kann.

Diese Aufgabe wird durch die Merkmale des Anspruch 1 gelöst. Die Koinjektionsdüse für eine Spritzgussvorrichtung zur Herstellung von mehrschichtigen Spritzgusserzeugnissen, umfasst einen ersten Schmelzezuführungskanal für eine erste Schmelze und einen zweiten Schmelzezuführungskanal für eine zweite Schmelze. Die beiden Schmelzezuführungskanäle können einfach an eine Zuführungseinrichtung für die erste respektive zweite Schmelze angeschlossen werden. Weiter umfasst die Koinjektionsdüse eine zentralen Bohrung; eine in der zentralen Bohrung axial bewegbar aufgenommene Ventilnadel zum Öffnen und Schliessen einer Düsenöffnung; einen ringförmigen inneren Schmelzekanal, der in der stromab gerichteten Hälfte der Koinjektionsdüse durch die zentrale Bohrung und die Ventilnadel ausgebildet ist und fluidisch mit dem ersten Schmelzezuführungskanal verbunden ist; einen ringförmigen mittleren Schmelzekanal, der fluidisch mit dem zweiten Schmelzezuführungskanal verbunden ist und sich um den ringförmigen inneren Schmelzkanal erstreckt; und einen ringförmigen äusseren Schmelzekanal, der fluidisch mit dem ersten Schmelzezuführungskanal verbunden ist und sich um den ringförmigen mittleren Schmelzkanal erstreckt. Der innere, mittlere und äussere Schmelzekanal sind im Bereich der Düsenspitze zur Bildung eines konzentrisch geschichteten Schmelzestrom fluidisch zusammengeführt. Die Koinjektionsdüse weist weiter eine in die zentrale Bohrung integrierte Rückflusssperre für die zweite Schmelze auf, die durch eine Ausnehmung in der Ventilnadel und einen die zentrale Bohrung passierenden Schmelzekanal für die zweite Schmelze ausgebildet ist, wobei in einer Offenstellung der Rückflusssperre die Ausnehmung derart in Bezug auf den passierenden Schmelzekanal angeordnet ist, dass die zweite Schmelze durch den passierenden Schmelzekanal fliessen kann, indem sie in der zentralen Bohrung an der Ventilnadel vorbei fliessen kann.

Die zweite Schmelze, die nach der Zuführung in die Koinjektionsdüse in dem die zentrale Bohrung passierenden Kanal geführt wird, kann auf diese Weise je nach Stellung der bewegbaren Ventilnadel - die auch zur Öffnung und Schliessung der Düsenmündung dient - den passierenden Schmelzekanal durchfliessen oder nicht durchfliessen. Für die in die Koinjektionsdüse integrierte Rückflusssperre wird also die ohnehin vorhandene Ventilnadel verwendet. Auf diese Weise lässt sich eine gegenüber den Stand der Technik einfachere und kompaktere Koinjektionsdüse resp. Koinjektionseinrichtung bauen.

Bevorzugt sind die Ausnehmung und der passierende Schmelzekanal derart relativ zueinander angeordnet, dass die Ventilnadel in einer ersten Stellung die Düsenmündung und den passierenden Schmelzekanal schliessst, in einer zweiten Stellung die Düsenmündung öffnet bei geschlossenem passierenden Schmelzekanal, und in einer dritten Stellung die Düsenmündung sowie den passierenden Schmelzekanal öffnet. In der ersten Stellung kann keine der beiden Schmelzen fliessen. In der zweiten Stellung fliesst lediglich die erste Schmelze und der Fluss der zweiten Schmelze ist blockiert. Dabei wird auch ein Rückfluss der zweiten Schmelze durch Hineindrücken der ersten Schmelze in den mittleren Schmelzekanal effizient verhindert. In der dritten Stellung, welcher der oben erwähnten Offenstellung der Ventilnadel entspricht, können die erste und die zweite Schmelze zur Düsenmündung hin fliessen. Die Ausnehmung kann in Form einer Einschnürung, einer Querbohrung oder einer umlaufenden oder querende Nut ausgebildet sein.

Weitere Ausführungsformen der Erfindung sind in den abhängigen Ansprüchen angegeben.

In einer Ausführungsform der Koinjektionsdüse verbindet der die zentrale Bohrung passierende Schmelzekanal den zweiten Schmelzezuführungskanal fluidisch mit dem ringförmigen mittleren Kanal für die zweite Schmelze. Bevorzugt ist der passierende Schmelzekanal in der stromauf gerichteten Hälfte der Koinjektionsdüse angeordnet, d.h. stromauf vom ringförmigen inneren Schmelzekanal.

Der die zentrale Bohrung passierende Schmelzekanal weist bevorzugt einen einleitenden Schmelzekanal und mindestens einen ausleitenden Schmelzekanal auf. Der einleitende Schmelzekanal ist fluidisch mit dem zweiten Schmelzezuführungskanal verbunden. Der mindestens eine ausleitende Schmelzekanal ist fluidisch mit dem ringförmigen mittleren Schmelzekanal verbunden. Bevorzugt ist der passierende Schmelzekanal im Verteilereinsatz durch mindestens eine durchgehende Bohrung oder durch mehrere seitlich in die zentrale Bohrung mündende Bohrungen ausgebildet. Die Öffnungen des einleitenden Schmelzekanal und des mindestens einen ausleitenden Schmelzekanal in die zentrale Bohrung können in axialer Richtung auf etwa gleicher Höhe angeordnet.

In einer Ausführungsform umfasst die Koinjektionsdüse einen Düsenkörper mit einer zentralen Bohrung, in welcher ein zylindrischer Verteilereinsatz der Koinjektionsdüse, welcher die zentralen Bohrung der Koinjektionsdüse aufweist, aufgenommen ist. Bevorzugt ist der passierende Schmelzekanal im Verteilereinsatz und durch mindestens eine durchgehende Bohrung oder durch mehrere in die zentrale Bohrung mündende Bohrungen ausgebildet ist.

In einer Ausführungsform ist der passierende Schmelzekanal durch einen einleitenden Schmelzekanal und zwei ausleitenden Schmelzekanälen ausgebildet, wobei der einleitende Schmelzekanal mit dem zweiten Schmelzezuführungskanal fluidisch verbunden ist und die beiden ausleitenden Schmelzekanäle über jeweils einen Verteilerkanal fluidisch mit dem ringförmigen mittleren Schmelzekanal verbunden sind. Die Verteilerkanäle können als in die Oberfläche des Schmelzeverteilereinsatzes eingearbeitete Nuten ausgebildet sein. Dies ist auch bei nur einem ausleitenden Schmelzekanal und einem Verteilerkanal möglich.

Die Erfindung betrifft weiter eine Koinjektionseinrichtung mit mindestens einer voran beschriebenen Koinjektionsdüse. Die Koinjektionsdüse ist dabei in einer Düsenhalteplatte gehalten und mit ihrer Spitze in einer Aussparung einer Formplatte aufgenommen.

In einer Ausführungsform können Bereiche der Aussparung in der Formplatte den ringförmigen äusseren Schmelzekanal begrenzen, wobei die Düsenmündung in der Formplatte ausgebildet ist.

Die Koinjektionseinrichtung kann eine Schmlezeverteilerplatte mit einer ersten Schmelzezuführung und einer zweiten Schmelzezuführung aufweisen, wobei der erste Schmelzezuführungskanal der Koinjektionsdüse mit der ersten Schmelzezuführung und der zweite Schmelzezuführungskanal der Koinjektionsdüse mit der zweiten Schmelzezuführung verbunden ist.

Bevorzugt erstreckt sich die Ventilnadel der Koinjektionsdüse berührungslos durch eine Bohrung in der Schmelzeverteilerplatte und ist am Ende stromauf mit einer Ventilnadelbetätigungseinrichtung verbunden.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Schnittdarstellung einer Koinjektionseinrichtung mit einer Koinjektionsdüse in einer Gesamtansicht in einer Spritzgussform;
- Fig. 2: eine vergrösserte Detailansicht der Koinjektionsdüse aus Fig. 1;
- Fig. 3: eine Explosionsdarstellung einer Koinjektionsdüse;
- Fig. 4: eine Schnittdarstellung einer Koinjektionsdüse ohne Ventilnadel;
- Fig. 5: eine Schnittdarstellung der Rückflusssperre;
- Fig. 6: unter (a) bis (d) vier Seitenansichten von Teilen der Koinjektionsdüse in einer Explosionsdarstellung;
- Fig. 7: unter (a) und (b) jeweils eine Schnittdarstellung von Teilen der Koinjektionsdüse in einer Explosionsdarstellung; und
- Fig. 8: unter (a) bis (c) jeweils eine Schnittdarstellung der Koinjektionsdüse mit drei unterschiedliche Stellungen der Ventilnadel.

### Wege zur Ausführung der Erfindung

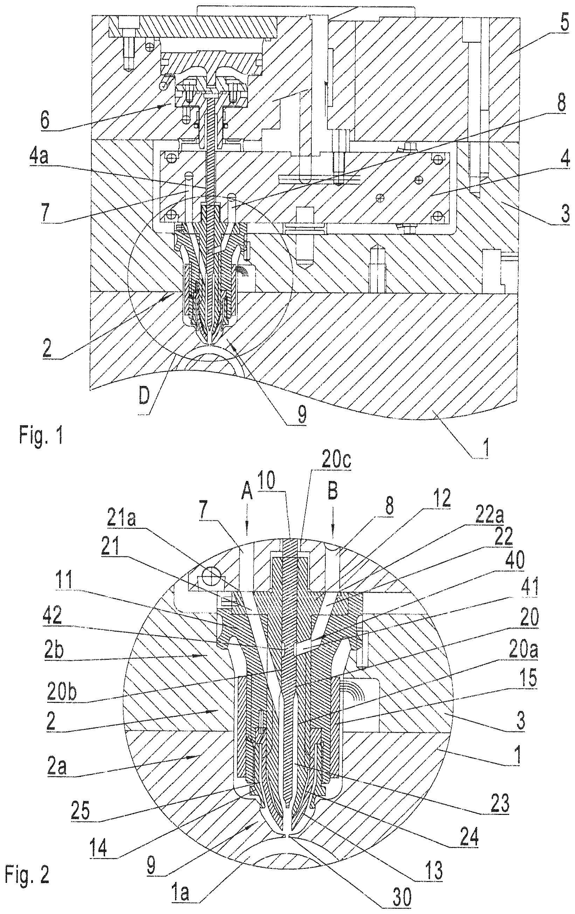

Fig. 1 zeigt eine Schnittdarstellung einer Heisskanal-Koinjektionseinrichtung zur Herstellung mehrschichtiger, eine Barriereschicht aufweisender Spritzgusserzeugnisse. Die Koinjektionseinrichtung umfasst eine Formplatte 1 mit einer Aussparung für eine Spitze 9 einer Koinjektionsdüse 2. Die Koinjektionsdüse 2 ist in einer Düsenhalteplatte 3 gehalten. An der der Spitze 9 entgegengesetzten Seite (also stromauf) weist die Koinjektionsdüse 2 eine erste Schmelzezuführungsöffnung 21a für die Zuführung einer ersten Schmelze A durch eine erste Schmelzezuführung 7 und eine zweite Schmelzezuführungsöffnung 22a für die Zuführung einer zweiten Schmelze B durch eine zweite Schmelzezuführung 8 auf. In der Düsenhalteplatte 3 ist ferner eine Schmelzeverteilerplatte 4 aufgenommen, welche mittels ersten und zweiten Schmelzezuführungen 7, 8 die Schmelzen A, B auf verschiedenen Koinjektionsdüsen 2 verteilt, wobei hier nur eine Koinjektionsdüse dargestellt ist. Darüber ist weiter eine Rückenplatte 5 zur Aufnahme der Ventilnadelbetätigungseinrichtung 6 für eine jeweilige Ventilnadel 10 der Koinjektionsdüse 2 angeordnet.

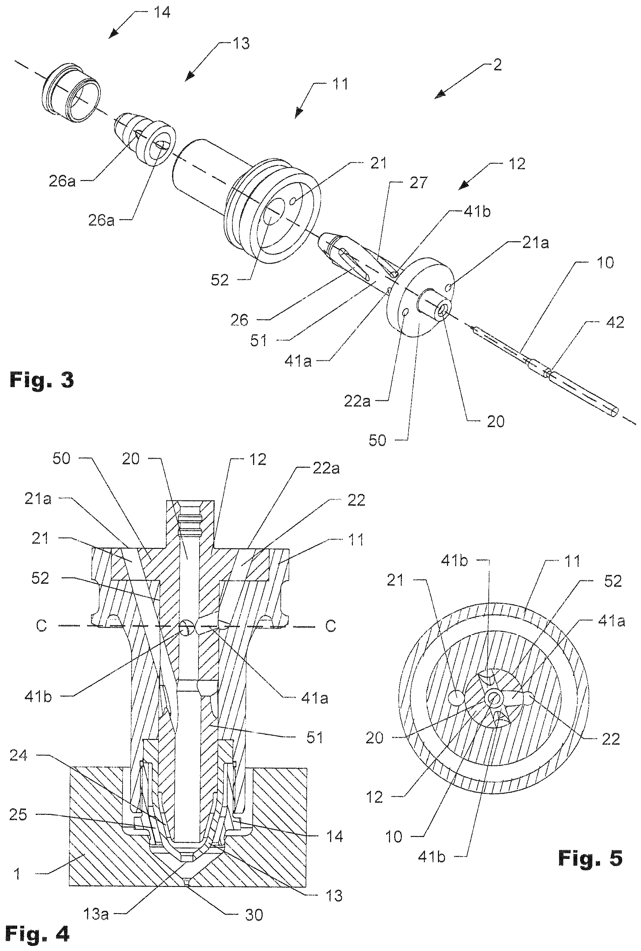

Fig. 2 zeigt eine Detailansicht der Koinjektionsdüse 2 aus Fig. 1 (Kreis D). Die Koinjektionsdüse 2 umfasst vier konzentrisch ineinander greifende Teile: einen Düsenkörper 11, einen Schmelzeverteilereinsatz 12, eine Trennhülse 13, und eine Halte- und Dichtungshülse 14. Der vierteilige Aufbau (respektive fünfteilig inkl. Ventilnadel 10) ist auch in der Explosionsdarstellung der Fig. 3 ersichtlich. Der Düsenkörper 11 kann mit einem Heizelement 15 versehen sein.

Die Koinjektionsdüse 2 weist eine zentrale Bohrung 20 auf, welche sich axial durch den Schmelzeverteilereinsatz 12 erstreckt, und in welcher die Ventilnadel 10 bewegbar aufgenommen ist. Die zentrale Bohrung 20 weist in einem unteren Abschnitt 20a (d.h. in der stromab liegenden Hälfte 2a der Koinjektionsdüse 2) einen grösseren Durchmesser auf als im oberen Bereich 20b (d.h. in der stromauf liegenden Hälfte 2b der Koinjektionsdüse 2), so dass sich entlang der Ventilnadel 10 ein ringförmiger innerer Schmelzekanal 23 ausbildet. Die Ventilnadel 10 kann ebenfalls in diesem Bereich verjüngt sein, um den Querschnitt des ringförmigen inneren Schmelzekanals 23 zu vergrössern. Auch kann nur die Ventilnadel verjüngt ausgebildet sein und die zentrale Bohrung dabei über die gesamte Länge den gleichen Durchmesser aufweisen. Der ringförmige innere Schmelzekanal 23 ist stromauf fluidisch mit einem ersten Schmelzezuführungskanal 21 für die erste Schmelze A verbunden. Stromab ist er fluidisch mit einer Düsenmündung 30 verbunden.

In der Ausführungsform der Fig. 2 weist ist der innere Schmelzekanal 23 im Bereich einer konisch zulaufenden Spitze des Schmelzeverteilereinsatzes 12 verjüngt, so dass er mittels der Ventilnadel 10 geschlossen werden kann. Um eine solche Verjüngung zu erzielen, kann der ansonsten einteilig hergestellte Schmelzerverteilereinsatz 12 eine eingeschraubte oder fest verschweisste konische Spitze aufweisen.

Die Schmelzeverteilerplatte 4 weist eine Bohrung 4a auf, durch welche sich die Ventilnadel 10 weiter bis zur Ventilnadelbetätigungseinrichtung 6 erstreckt. Der Durchmesser der Bohrung 4a der Schmelzeverteilerplatte 4, die sich stromauf von der Koinjektionsdüse 2 befindet, ist grösser als der Durchmesser der zentralen Bohrung 20 im oberen Bereich 20b, so dass die Ventilnadel 10 berührungslos durch die Schmelzeverteilerplatte 4 hindurchgeführt werden kann, um die Wärmekonduktion über die Ventilnadel 10 in die Schmelzeverteilerplatte 4 und die Rückenplatte 5 zu reduzieren.

Der erste Schmelzezuführungskanal 21 für die erste Schmelze A ist mit der ersten Schmelzezuführung 7 der Koinjektionseinrichtung verbunden. Ein zweiter Schmelzezuführungskanal 22 für die zweite Schmelze B ist mit der zweiten Schmelzezuführung 8 der Koinjektionseinrichtung verbunden.

In der gezeigten Koinjektionsdüse 2 verlaufen der erste und zweite Schmelzezufürungskanal 21, 22 geradlinig und sind durch Bohrungen im Düsenkörper 11 und im Schmelzeverteilereinsatz 12 ausgebildet.

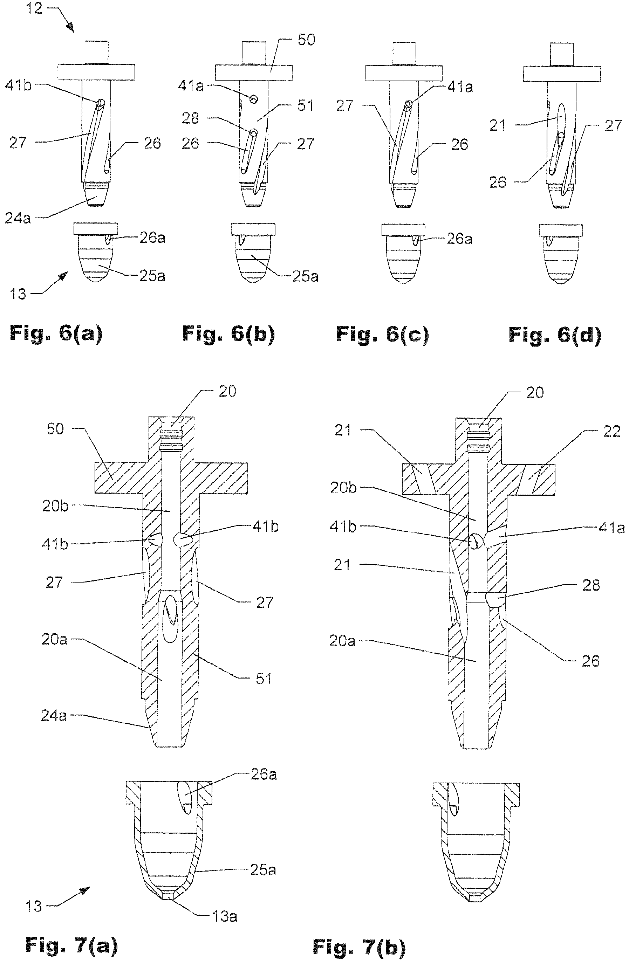

Der erste Schmelzezuführungskanal 21 für die Schmelze A führt von einer ersten Schmelzezuführungsöffnung 21a an der oberen Seite des Schmelzeverteilereinsatzes 12 zum ringförmigen inneren Schmelzekanal 24. Mindestens ein Verteilerkanal 26 (in Fig. 1 und 2 nicht erkennbar; siehe Fig. 3 und 6) für die Schmelze A ist fluidisch mit dem ersten Schmelzezuführungskanal 21 und einem ringförmigen äusseren Kanal 25 verbunden, so dass sich ein Schmelzestrom A in zwei Ströme aufteilt, welche in den ringförmigen inneren Schmelzekanal 24 respektive in den ringförmigen äusseren Schmelzekanal 25 geleitet wird. Diese beiden geteilten Schmelzeströme bilden die innere und äussere Schicht eines konzentrisch geschichteten Schmelzestrom, welcher schliesslich durch die Düsenmündung 30 in einen Formhohlraum 1a der Formplatte 1 gelangt.

Der zweite Schmelzezuführungskanal 22 für die Schmelze B führt von einer zweiten Schmelzezuführungsöffnung 22a an der oberen Seite des Schmelzeverteilereinsatzes 12 zu einem die zentrale Bohrung 20 passierenden Schmelzekanal 41, welcher zusammen mit der Ventilnadel 10 eine in die zentrale Bohrung 20 integrierte Rückflusssperre 40 für die zweite Schmelze B ausbildet. Dazu weist die bewegbare Ventilnadel 10 in der gezeigten Koinjektionsdüse 2 eine Ausnehmung 42 in Form einer umlaufenden Nut oder Einschnürung auf. Je nach Stellung der Ventilnadel 10 wird der Schmelzestrom durch den passierenden Schmelzekanal 41 blockiert. In einer Offenstellung der Rückflusssperre 40 ist die Ausnehmung 42 mit dem passierenden Schmelzekanal 41 kommunizierend ausgerichtet, so dass die Schmelze B die Ventilnadel 10 in der zentralen Bohrung 20 umfliessen kann. In einer in Längsrichtung der Ventilnadel 10 verschobenen Schliessstellung wird der passierende Schmelzekanal 41 durch die Ventilnadel 10 komplett verschlossen. Der passierende Schmelzekanal 41 ist stromab fluidisch über mindestens einen Verteilerkanal 27 (in Fig. 1 und 2 nicht erkennbar; siehe Fig. 3 und 6) mit einem ringförmigen mittleren Schmelzekanal 24 verbunden, der sich zwischen dem ringförmigen inneren Schmelzkanal 23 und dem ringförmigen äusseren Schmelzekanal 25 erstreckt.

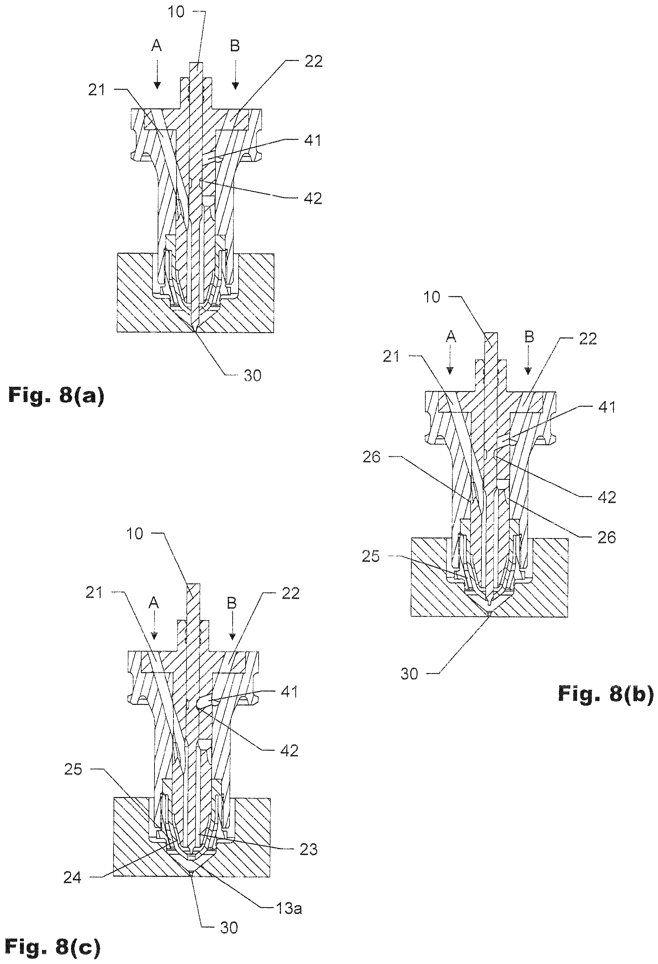

Die Ausnehmung 42 und der passierende Schmelzekanal 41 sind derart relativ zueinander angeordnet, dass die Ventilnadel 10 in einer ersten Stellung die Düsenmündung 30 und den passierenden Schmelzekanal 41 schliessst (vgl. Fig. 8(a), in einer zweiten Stellung die Düsenmündung 30 öffnet bei geschlossenem passierenden Schmelzekanal 41 (vgl. Fig. 8(b)), und in einer dritten Stellung die Düsenmündung 30 sowie den passierenden Schmelzekanal 41 öffnet (vgl. Fig. 8(c)). In der ersten Stellung kann keine der beiden Schmelzen A, B fliessen. In der zweiten Stellung fliesst lediglich die erste Schmelze A und der Fluss der zweiten Schmelze B ist blockiert. Dabei wird auch ein Rückfluss der zweiten Schmelze B durch Hineindrücken der ersten Schmelze A in den mittleren Schmelzekanal 24 effizient verhindert. In der dritten Stellung, welcher der oben erwähnten Offenstellung der Ventilnadel 10 entspricht, können die erste und die zweite Schmelze A, B zur Düsenmündung 30 hin fliessen. Die Ausnehmung 42 kann in Form einer Einschnürung, einer Querbohrung oder einer umlaufenden oder querende Nut ausgebildet sein. Zur Ausbildung des ringförmigen mittleren Schmelzekanals 24 und des ringförmigen äusseren Schmelzekanals 25 weist die Koinjektionsdüse 2 die Trennhülse 13 auf, die in der gezeigten Koinjektionsdüse 2 stromab konisch zulaufend ausgeführt ist. Die nach innen gerichtete Oberfläche bildet einen Teil des mittleren Schmelzekanals 24, die nach aussen gerichtete Oberfläche 25a bildet einen Teil des äusseren Schmelzekanals 25. Der innere Schmelzekanal 24 wird zudem durch eine Teil der äusseren Oberfläche 24a des Schmelzeverteilereinsatzes 12 ausgebildet. Der äussere Schmelzekanal 25 wird zudem durch einen Teil einer inneren Oberfläche der Halte- und Dichtungshülse 14 ausgebildet, welche einerseits die Trennhülse 13 in der Koinjektionsdüse 2 fixiert und andererseits die Spitze 9 der Koinjektionsdüse 2 gegenüber der Aussparung in der Formplatte 1 abdichtet, so dass die Spitze 9 der Koinjektionsdüse 2 respektive die äussere Oberfläche 25a der Trennhülse 13 und ein Teil der Aussparung der Formplatte 1 eine vordere Schmelzekammer respektive einen Teil des ringförmigen äusseren Schmelzekanals 25 bilden.

Der ringförmige innere, mittlere und äussere Schmelzekanal 23, 24, 25 sind im Bereich der Düsenspitze 9 zur Bildung eines konzentrisch geschichteten Schmelzestrom zusammengeführt, welcher schliesslich durch die Düsenmündung 30 in den Formhohlraum 1a der Formplatte 1 austreten kann. Mit der bewegbaren Ventilnadel 10, welche in der gezeigten Form eine sich verjüngende Spitze aufweist, kann die Düsenmündung 30 geöffnet respektive geschlossen werden. Die Formplatte 1 zusammen mit der Düsenspitze 9 der Koinjektionsdüse 2 bilden so eine Art vordere Düsenkammer, von welcher die Schmelzen A, B durch die mit der Ventilnadel verschliessbare Düsenmündung 30 in einen Formhohlraum 1a der Formplatte 1 gelangen.

Fig. 3 zeigt eine Explosionsdarstellung der Koinjektionsdüse 2 umfassend die fünf Bestandteilen: Ventilnadel 10 (nur vorderer in der Koinjektionsdüse liegender Bereich dargestellt), Düsenkörper 11, Schmelzeverteilereinsatz 12, Trennhülse 13 und Halte- und Dichtungshülse 14. Fig. 4 zeigt eine Schnittdarstellung der Koinjektionsdüse 2 aus Fig. 3 in zusammengesetzter Form ohne Ventilnadel und mit schematisch angedeuteter Formplatte 1.

Die Ventilnadel 10 (Fig. 3) weist einen vorderen verjüngten Abschnitt (in der Hälfte 2a stromab) auf, welcher zusammen mit der zentralen Bohrung 20 im Schmelzeverteilereinsatz 12 den ringförmigen inneren Schmelzekanal 23 ausbildet. Stromauf (im Bereich der Hälfte 2b) weist die Ventilnadel 10 eine umlaufende Nut oder Einschnürung 42 auf.

Der Schmelzeverteilereinsatz 12 mit der zentralen Bohrung 20 weist stromauf einen Flansch 50 mit der ersten Schmelzezuführungsöffnung 21a und der zweiten Schmelzezuführungsöffnung 22a. Diese Öffnungen bilden den Eingang zum ersten respektive zweiten Schmelzezuführungskanal 21, 22. Ein stiftförmiger oder kreiszylinderförmiger Abschnitt 51 des Schmelzeverteilereinsatzes 12 stromab vom Flansch 50 ist in einer zentralen Bohrung 52 des Düsenkörpers 11 aufgenommen. An der Manteloberfläche des Abschnitts 51 eingeformte Nuten bilden Verteilerkanäle 26, 27 für die Schmelzen A, B, welche die Schmelzezuführungskanäle 21, 22 fluidisch mit dem ringförmigen äusseren und ringförmigen mittleren Schmelzekanälen 25, 24 verbinden. Die Verteilerkanäle 26, 27 werden dabei teilweise durch die Innenwand der zentralen Bohrung 52 im Düsenkörper 11 abgeschlossen. Im oberen Bereich des Abschnitts 51 des Schmelzeverteilereinsatzes 12 ist ein einleitender Schmelzekanal 41a und einer der beiden ausleitenden Schmelzekanäle 41b des die zentrale Bohrung 20 passierenden Schmelzekanals 41 zu erkennen. Der einleitende Schmelzekanal 41a ist fluidisch mit dem zweiten Schmelzezuführungskanal 22 verbunden. Die ausleitenden Schmelzekanäle 41b sind jeweils über einen Verteilerkanal 27 fluidisch mit dem ringförmigen mittleren Schmelzekanal 24 verbunden. In der gezeigten Ausführungsform verlaufen die Verteilerkanäle 26, 27 in axialer Richtung sprialförmig, was ein gegenüber der axialen Richtung geneigtes Eintreten der jeweiligen Schmelze in den ringförmigen äusseren respektive inneren Schmelzekanal 25, 24 erlaubt, um eine bessere Schmelzeverteilung zu erreichen (vgl. auch Fig. 6).

Fig. 5 zeigt eine Detailschnittdarstellung der integrierten Rückflusssperre 40. Der die zentrale Bohrung 20 passierende Schmelzekanal 41 wird durch einen einleitenden Schmelzekanal 41a und zwei ausleitenden Schmelzekanälen 41b ausgebildet. Diese sind durch seitlich Bohrungen im stiftförmigen oder kreiszylinderförmigen Abschnitt 51 des Schmelzeverteilereinsatzes 12 ausgebildet, welche bis in die zentrale Bohrung 20 reichen. Die Bohrung im Düsenkörper 11 für den zweiten Schmelzezuführungskanal 22 reicht bis zur Bohrung für den einleitenden Schmelzekanal 41a. In der zentralen Bohrung 20 ist die Ventilnadel 10 mit der Ausnehmung 42 axial bewegbar aufgenommen. In Fig. 5 ist die Rückflusssperre in der Offenstellung dargestellt und die Schmelze B kann die Rückflusssperre ungehindert passieren.

In Fig. 3 und Fig. 4 sind ferner die Trennhülse 13 und die Halte- und Dichtungshülse 14 ersichtlich, welche wie bereits beschrieben zusammen mit dem Schmelzeverteilereinsatz 12 den ringförmigen mittleren Schmelzekanal 24 und den ringförmigen äusseren Schmelzekanal 25 ausbilden. Eine konische Spitze des stiftförmigen Abschnitts 51 des Schmelzeverteilereinsatzes 12 ist von der konischen Trennhülse 13 beabstandet in dieser aufgenommen. Die Spitze der konischen Trennhülse 13 ist von der Halte- und Dichtungshülse 14 beabstandet in dieser aufgenommen. Die Halte- und Dichtungshülse 14 ist fest im Düsenkörper 11 verschraubt und hält so die Trennhülse 13 in der Koinjektionsdüse 2. Dazu kann die Trennhülse 13 am Ende stromauf einen Flansch aufweisen. Der Schmelzeverteilereinsatz 12 ist über seinen Flansch 50 mit dem Düsenkörper 11 verschraubt. Zur Reinigung der Koinjektionsdüse 2 kann diese einfach aus Düsenhalteplatte 3 und der Formplatte 1 entfernt und in ihre Einzelteile zerlegt werden.

Ein besonderer Vorteil des Aufbaus der Koinjektionsdüse mit dem beschriebenen Schmelzeverteilereinsatz liegt darin, dass die integrierte Rückflusssperre und die Verteilung der beiden Schmelzen innerhalb der Koinjektionsdüse auf einfach Weise durch wenige Bohrungen und eingefrästen Nuten im Schmelzeverteilereinsatz erreicht werden können.

In der in Fig. 3 und Fig. 4 gezeigten Koinjektionsdüse 2 weist die Trennhülse 13 eine Öffnung 13a auf, deren Durchmesser dem Durchmesser der verjüngten Ventilnadel 10 entspricht. Auf diese Weise kann die Ventilnadel 10 eine Stellung annehmen, in welcher die fluidische Verbindung des ringförmigen inneren und mittleren Schmelzekanals 23, 24 mit der Düsenmündung 30 unterbrochen ist. Die Öffnung 13a kann aber auch denselben Durchmesser wie der untere Abschnitt 20a der zentrale Bohrung 20 aufweisen.

Fig. 6 zeigt vier Seitenansichten Fig. 6(a) bis 6(d) (vorne, rechts, hinten, links) des Schmelzeverteilereinsatzes 12 und der Trennhülse 13 in einer Explosionsdarstellung, wobei die Ansichten jeweils um 90 Grad gedreht sind. Fig. 7(a) (rechts, vgl. Fig.6(b)) und Fig. 7(b) (vorne, vgl. Fig.6(a)) zeigen jeweils eine Schnittdarstellung des Schmelzeverteilereinsatzes 12 und der Trennhülse 13 in einer Explosionsdarstellung.

In Fig. 6 ist der spiralförmige Verlauf der Verteilerkanäle 26, 27 besonders gut ersichtlich. In der gezeigten Ausführungsform des Schmelzeverteilereinsatzes 12 sind für die erste und die zweite Schmelze A, B jeweils zwei Verteilerkanäle 26, 27 ausgebildet. Die zwei Verteilerkanäle 26 für die erste Schmelze A und die zwei Verteilerkanäle 27 für die zweite Schmelze B sind abwechselnd und gleichmässig voneinander beabstandet über den Umfang des kreiszylinderförmigen Abschnitts 51 verteilt angeordnet, was eine optimale Wärmeverteilung innerhalb der Koinjektionsdüse 2 erlaubt. In gleicher Weise könnten die Verteilerkanäle auch in axialer Richtung gerade geführt sein.

In Fig. 6(b) ist der einleitende Schmelzekanal 41a der Rückflusssperre ersichtlich. In der zentralen Bohrung 20 des Schmelzeverteilereinsatzes 12 wird die zweite Schmelze B in zwei Ströme geteilt, welche durch die ausleitenden Schmelzekanäle 41b (Fig. 6(a) und 6(c)) in die jeweiligen Verteilerkanäle 27 gelangen.

Der erste Schmelzezuführungskanal 21 reicht bis zur zentralen Bohrung 20 des Schmelzeverteilereinsatzes 12 (Fig. 7(b)). In diesem Bereich wird ein Teil der Schmelze A seitlich in zwei Verteilerkanäle 26 an der Oberfläche des Schmelzeverteilereinsatzes 12 geführt und ein Teil wird in den ringförmigen inneren Schmelzekanal 23 entlang dem unteren Abschnitt 20a der zentralen Bohrung 20 geführt. Der erster Verteilerkanal 26 wird direkt durch den ersten Schmelzezuführungskanal 21 gespiesen. Ein Verbindungskanal 28 verbindet den zweiten Verteilerkanal 26 mit der zentralen Bohrung 20 und wird so mit der ersten Schmelze A versorgt.

Die Verteilerkanäle 27 setzen stromauf von den Verteilerkanälen 26 an und reichen weiter stromab als die Verteilerkanäle 26 bis in den Bereich des ringförmigen mittleren Schmelzekanals 24, der teilweise durch die Oberfläche 4a der konischen Spitze des Schmelzeverteilereinsatzes 12 gebildet wird. Die Verteilerkanäle 26 für die erste Schmelze A sind also kürzer ausgebildet als die Verteilerkanäle 27 für die zweite Schmelze B.

Der ringförmiger äusserer Schmelzekanal 25 reicht in axialer Richtung weiter stromauf als der ringförmige mittlere Schmelzekanal 24. Auf diese Weise kann der Verteilerkanal 26 durch eine Bohrung 26a, in der Trennhülse 13 den ringförmigen äusseren Schmelzekanal 25 speisen, ohne den mittleren 24 queren zu müssen. Diese Bohrung 26a endet in der äusseren Oberfläche 25a der Trennhülse 13, welche teilweise den ringförmigen äusseren Schmelzekanal 25 ausbildet.

In allen Figuren wurden jeweils gleiche Bezugszeichen für gleich Teile verwendet.

### Bezeichnungsliste

- 1: Formplatte
- 1a: Formhohlraum (Kavität)
- 2: Koinjektionsdüse
- 2a: Hälfte der Koinjektionsdüse (stromab)
- 2b: Hälfte der Koinjektionsdüse (stromauf)
- 3: Düsenhalteplatte
- 4: Schmelzeverteilerplatte
- 4a: Bohrung
- 5: Rückenplatte
- 6: Ventilnadelbetätigungseinrichtung
- 7: erste Schmelzezuführung
- 8: zweite Schmelzezuführung
- 9: Düsenspitze
- 10: Ventilnadel
- 11: Düsenkörper
- 12: Schmelzeverteilereinsatz
- 13: Trennhülse
- 14: Halte- und Dichtungshülse
- 15: Heizelement
- 20: zentrale Bohrung
- 20a: unterer Abschnitt der zentralen Bohrung
- 20b: oberer Abschnitt der zentralen Bohrung
- 21: erster Schmelzezuführungskanal
- 21a: erste Schmelzezuführungsöffnung
- 22: zweiter Schmelzezuführungskanal
- 22a: zweite Schmelzezuführungsöffnung
- 23: ringförmiger innerer Schmelzekanal
- 24: ringförmiger mittlerer Schmelzekanal
- 25: ringförmiger äusserer Schmelzekanal
- 26: Verteilerkanal für Schmelze A
- 26a: Bohrung
- 27: Verteilerkanal für Schmelze B
- 28: Verbindungskanal
- 30: Düsenmündung
- 40: Rückflusssperre
- 41: passierender Schmelzekanal
- 41a: einleitender Schmelzekanal
- 41b: ausleitender Schmelzekanal
- 42: Ausnehmung
- 50: Flansch
- 51: stiftförmiger/kreiszylinderförmiger Abschnitt
- 52: zentrale Bohrung des Düsenkörpers
- A: erste Schmelze
- B: zweite Schmelze

## Patentansprüche

1. Koinjektionsdüse (2) für eine Spritzgussvorrichtung zur Herstellung von mehrschichtigen Spritzgusserzeugnissen, umfassend
einen ersten Schmelzezuführungskanal (21) für eine erste Schmelze (A); einen zweiten Schmelzezuführungskanal (22) für eine zweite Schmelze (B);
eine zentralen Bohrung (20);
eine in der zentralen Bohrung (20) axial bewegbar aufgenommene Ventilnadel (10) zum Öffnen und Schliessen einer Düsenmündung (30);
einen ringförmigen inneren Schmelzekanal (23), der in der stromab gerichteten Hälfte (2a) der Koinjektionsdüse (2) durch die zentrale Bohrung (20) und die Ventilnadel (10) ausgebildet ist und fluidisch mit dem ersten Schmelzezuführungskanal (21) verbunden ist;
einen ringförmigen mittleren Schmelzekanal (24), der fluidisch mit dem zweiten Schmelzezuführungskanal (22) verbunden ist und sich um den ringförmigen inneren Schmelzkanal (23) erstreckt;
einen ringförmigen äusseren Schmelzekanal (25), der fluidisch mit dem ersten Schmelzezuführungskanal (22) verbunden ist und sich um den ringförmigen mittleren Schmelzkanal (24) erstreckt;
wobei der innere, mittlere und äussere Schmelzekanal (23, 24, 25) im Bereich der Düsenspitze (9) zur Bildung eines konzentrisch geschichteten Schmelzestrom fluidisch zusammengeführt sind;
**dadurch gekennzeichnet, dass**
die Koinjektionsdüse (2) eine in die zentrale Bohrung (20) integrierte Rückflusssperre (40) für die zweite Schmelze (B) aufweist, die durch eine Ausnehmung (42) in der Ventilnadel (10) und einen die zentrale Bohrung (20) passierenden Schmelzekanal (41) für die zweite Schmelze (B) ausgebildet ist, wobei in einer Offenstellung der Rückflusssperre (40) die Ausnehmung (42) derart in Bezug auf den passierenden Schmelzekanal (41) angeordnet ist, dass die zweite Schmelze (B) durch den passierenden Schmelzekanal (41) fliessen kann, indem sie in der zentralen Bohrung (20) an der Ventilnadel (10) vorbei fliessen kann.

2. Koinjektionsdüse nach Anspruch 1, **dadurch gekennzeichnet, dass** der die zentrale Bohrung (20) passierende Schmelzekanal (41) den zweiten Schmelzezuführungskanal (22) fluidisch mit dem ringförmigen mittleren Kanal (24) für die zweite Schmelze (B) verbindet.

3. Koinjektionsdüse nach einem der vorangehenden Ansprüche, **dadurch gekennzeichnet, dass** der die zentrale Bohrung (20) passierende Schmelzekanal (41) einen einleitenden Schmelzekanal (41a) und mindestens einen ausleitenden Schmelzekanal (41b) aufweist.

4. Koinjektionsdüse nach einem der vorangehenden Ansprüche, **dadurch gekennzeichnet, dass** der passierende Schmelzekanal (41) im Verteilereinsatz (12) durch mindestens eine durchgehende Bohrung oder durch mehrere in die zentrale Bohrung (20) mündende Bohrungen ausgebildet ist.

5. Koinjektionsdüse nach einem der vorangehenden Ansprüche, **dadurch gekennzeichnet, dass** die Öffnungen des einleitenden Schmelzekanalabschnitts (41a) und des mindestens einen ausleitenden Schmelzekanalabschnitts (41b) in die zentrale Bohrung (20) in axialer Richtung auf etwa gleicher Höhe angeordnet sind.

6. Koinjektionsdüse nach einem der vorangehenden Ansprüche, **dadurch gekennzeichnet, dass** die Koinjektionsdüse (2) einen Düsenkörper (11) mit einer zentralen Bohrung (52) umfasst, in welcher ein zylindrischer Verteilereinsatz (12), welcher die zentralen Bohrung (20) der Koinjektionsdüse (2) aufweist, aufgenommen ist.

7. Koinjektionsdüse nach Anspruch 8, **dadurch gekennzeichnet, dass** der passierende Schmelzekanal (41) im Verteilereinsatz (12) und durch mindestens eine durchgehende Bohrung oder durch mehrere in die zentrale Bohrung mündende Bohrungen ausgebildet ist.

8. Koinjektionsdüse nach einem der Ansprüche 3 bis 7, **dadurch gekennzeichnet, dass** der passierende Schmelzekanal (41) durch einen einleitenden Schmelzekanal (41a) und zwei ausleitende Schmelzekanal (41b) ausgebildet ist, wobei der einleitende Schmelzekanal (41a) mit dem zweiten Schmelzezuführungskanal (22) fluidisch verbunden ist und die beiden ausleitenden Schmelzekanäle (41b) über jeweils einen Verteilerkanal (27) fluidisch mit dem ringförmigen mittleren Schmelzekanal (24) verbunden sind.

9. Koinjektionsdüse nach Anspruch 8, **dadurch gekennzeichnet, dass** die Verteilerkanäle (27) als in die Oberfläche des Schmelzeverteilereinsatzes (12) eingearbeitete Nuten ausgebildet sind.

10. Koinjektionseinrichtung mit mindestens einer Koinjektionsdüse (2) nach einem der vorangehenden Ansprüche, **dadurch gekennzeichnet, dass** die Koinjektionsdüse (2) in einer Düsenhalteplatte (3) gehalten ist und mit ihrer Spitze (9) in einer Aussparung einer Formplatte (1) angeordnet ist.

11. Koinjektionseinrichtung nach Anspruch 10, **dadurch gekennzeichnet, dass** die Aussparung in der Formplatte (1) den ringförmigen äusseren Schmelzekanal (25) teilweise begrenzt und eine Düsenmündung (30) in der Formplatte (1) ausgebildet ist.

12. Koinjektionseinrichtung nach einem der Ansprüche 10 bis 11, **dadurch gekennzeichnet, dass** sie eine Schmelzeverteilerplatte (4) mit einer ersten Schmelzezuführung (7) und einer zweiten Schmelzezuführung (8) aufweist, wobei der erste Schmelzezuführungskanal (21) mit der ersten Schmelzezuführung (7) und der zweite Schmelzezuführungskanal (22) mit der zweiten Schmelzezuführung (8) verbunden ist.

13. Koinjektionseinrichtung nach einem der Ansprüche 10 bis 11, **dadurch gekennzeichnet, dass** die Ventilnadel (10) der Koinjektionsdüse (2) sich berührungslos durch eine Bohrung (4a) in der Schmelzeverteilerplatte (4) erstreckt und mit einer Ventilnadelbetätigungseinrichtung (6) verbunden ist.

## Claims

1. A co-injection nozzle (2) for an injection moulding device for the production of multilayer injection moulded products, comprising
a first melt supply channel (21) for a first melt (A); a second melt supply channel (22) for a second melt (B) ; a central bore (20);
an axially movable valve needle (10) accommodated in the central bore (20) to open and close a nozzle orifice (30);
an annular inner melt channel (23) which is formed in the downstream half (2a) of the co-injection nozzle (2) by the central bore (20) and the valve needle (10) and is in fluid communication with the first melt supply channel (21);
an annular middle melt channel (24) which is in fluid communication with the second melt supply channel (22) and which extends about the annular inner melt channel (23);
an annular outer melt channel (25) which is in fluid communication with the first melt supply channel (21) and which extends about the annular middle melt channel (24);
wherein the inner, middle and outer melt channels (23, 24, 25) converge fluidically in the region of the nozzle tip (9) in order to form a concentrically layered melt stream;
**characterized in that**
the co-injection nozzle (2) comprises a back-flow barrier (40) for the second melt (B) integrated into the central bore (20) and which is formed by a recess (42) in the valve needle (10) and a melt channel (41) for the second melt (B) traversing the central bore (20), wherein in an open position of the back-flow barrier (40), the recess (42) is disposed with respect to the traversing melt channel (41) in a manner such that the second melt (B) can flow through the traversing melt channel (41) inasmuch as it can flow in the central bore (20) past the valve needle (10).

2. The co-injection nozzle as claimed in claim 1, **characterized in that** the melt channel (41) traversing the central bore (20) places the second melt supply channel (22) in fluid communication with the annular middle channel (24) for the second melt (B).

3. The co-injection nozzle as claimed in one of the preceding claims, **characterized in that** the melt channel (41) traversing the central bore (20) is provided with an incoming melt channel (41a) and at least one outgoing melt channel (41b).

4. The co-injection nozzle as claimed in one of the preceding claims, **characterized in that** the traversing melt channel (41) in the distribution insert (12) is formed by at least one through bore or by a plurality of bores which open into the central bore (20).

5. The co-injection nozzle as claimed in one of the preceding claims, **characterized in that** the openings of the incoming melt channel (41a) and the at least one outgoing melt channel (41b) into the central bore (20) are disposed at approximately the same height in the axial direction.

6. The co-injection nozzle as claimed in one of the preceding claims, **characterized in that** the co-injection nozzle (2) comprises a nozzle body (11) with a central bore (52), in which a cylindrical distribution insert (12) which is provided with the central bore (20) of the co-injection nozzle (2) is accommodated.

7. The co-injection nozzle as claimed in claim 6, **characterized in that** the traversing melt channel (41) is located in the distribution insert (12) and is formed by at least one through bore or by a plurality of bores opening into the central bore.

8. The co-injection nozzle as claimed in one of claims 3 to 7, **characterized in that** the traversing melt channel (41) is formed by an incoming melt channel (41a) and two outgoing melt channels (41b), wherein the incoming melt channel (41a) is in fluid communication with the second melt supply channel (22) and the two outgoing melt channels (41b) are in fluid communication with the annular middle melt channel (24) via a respective distribution channel (27).

9. The co-injection nozzle as claimed in claim 8, **characterized in that** the distribution channels (27) are formed as grooves incorporated into the surface of the melt distribution insert (12).

10. A co-injection device with at least one co-injection nozzle (2) as claimed in one of the preceding claims, **characterized in that** the co-injection nozzle (2) is held in a nozzle holder plate (3) and is accommodated with its tip (9) in a recess of a mould plate (1).

11. The co-injection device as claimed in claim 10, **characterized in that** the recess in the mould plate (1) defines a portion of the annular outer melt channel (25) and a nozzle orifice (30) is formed in the mould plate (1) .

12. The co-injection device as claimed in claim 10 or claim 11, **characterized in that** it is provided with a melt manifold plate (4) with a first melt supply line (7) and a second melt supply line (8), wherein the first melt supply channel (21) is connected to the first melt supply line (7) and the second melt supply channel (22) is connected to the second melt supply line (8).

13. The co-injection device as claimed in claim 10 or claim 11, **characterized in that** the valve needle (10) of the co-injection nozzle (2) extends in a contact-free manner through a bore (4a) in the melt manifold plate (4) and is connected to a valve needle actuation device (6).

## Revendications

1. Buse de co-injection (2) pour dispositif de moulage par injection pour la fabrication de produits multicouches moulés par injection, comprenant
un premier canal d'acheminement de coulée (21) pour une première coulée (A) ;
un second canal d'acheminement de coulée (22) pour une seconde coulée (B) ;
un trou central (20) ;
un pointeau de soupape (10) reçu de manière mobile axialement dans le trou central (20) pour ouvrir et fermer une embouchure de buse (30) ;
un canal à coulée interne de forme annulaire (23) qui est formé dans la moitié (2a) tournée vers l'aval de la buse de co-injection (2) à travers le trou central (20) et le pointeau de soupape (10) et est liaison fluidique avec le premier canal d'acheminement de coulée (21) ;
un canal à coulée médian de forme annulaire (24) qui est en liaison fluidique avec le second canal acheminement de coulée (22) et s'étend autour du canal de coulée interne de forme annulaire (23) ;
un canal à coulée externe de forme annulaire (25) qui est en liaison fluidique avec le premier canal d'acheminement de coulée (22) et s'étend autour du canal à coulée médian de forme annulaire (24)
les canaux à coulée interne, médian et externe (23, 24, 25) étant réunis du point de vue fluidique au niveau de la pointe de la buse (9) pour former un flux de coulée à couches concentriques ;
**caractérisée en ce que**
la buse de co-injection (2) présente un barrage de reflux (40) intégré dans le trou central (20) pour la seconde coulée (B) et qui est constitué par un évidement (42) dans le pointeau de soupape (10) et un canal à coulée (41) passant dans le trou central (20) pour la seconde coulée (B), sachant que, dans une position d'ouverture du barrage de reflux (40), l'évidement (42) est disposé par rapport au canal de coulée passant (41) de manière à ce que la seconde coulée (B) puisse s'écouler dans le canal à coulée passant (41) du fait qu'elle peut passer devant le pointeau de soupape (10) dans le trou central (20).

2. Buse de co-injection selon la revendication 1, **caractérisée en ce que** le canal à coulée (41) passant dans le trou central (20) relie le second canal d'acheminement de coulée (22) du point de vue fluidique au canal médian de forme annulaire (24) pour la seconde coulée (B).

3. Buse de co-injection selon une des revendications précédentes, **caractérisée en ce que** le canal à coulée (41) passant dans le trou central (20) présente un canal à coulée d'introduction (41a) et au moins un canal à coulée d'évacuation (41b).

4. Buse de co-injection selon une des revendications précédentes, **caractérisée en ce que** le canal à coulée (41) passant dans le trou central (20) est constitué dans l'insert de répartition (12) par au moins un trou traversant ou plusieurs trous débouchant dans le trou central (20).

5. Buse de co-injection selon une des revendications précédentes, **caractérisée en ce que** les ouvertures de la section du en bas lorsque le canal à coulée d'introduction (41a) et de l'au moins une section de canal à coulée d'évacuation (41b) sont disposées dans le trou central (20) en direction axiale approximativement à la même hauteur.

6. Buse de co-injection selon une des revendications précédentes, **caractérisée en ce que** la buse de co-injection (2) comprend un corps de buse (11) doté d'un trou central (52) dans lequel est reçu un insert de répartition cylindrique (12) qui présente le trou central (20) de la buse de co-injection (2).

7. Buse de co-injection selon la revendication 8, **caractérisée en ce que** le canal à coulée passant (41) dans l'insert de répartition (12) est constitué par au moins un trou traversant ou plusieurs trous débouchant dans le trou central.

8. Buse de co-injection selon une des revendications 3 à 7, **caractérisée en ce que** le canal à coulée passant (41) est constitué par un canal à coulée d'introduction (41a) et par deux canaux à coulée d'évacuation (41b), le canal à coulée d'introduction (41a) étant relié du point de vue fluidique au second canal d'acheminement de coulée (22) et que deux canaux à coulée d'évacuation (41b) sont reliés respectivement du point de vue fluidique par un canal de répartition (27) au canal à coulée médian de forme annulaire (24).

9. Buse de co-injection selon la revendication 8, **caractérisée en ce que** les canaux de répartition (27) sont réalisés sous la forme de rainures pratiquées dans la surface de l'insert de répartition de coulée (12).

10. Dispositif de co-injection comportant au moins une buse de co-injection (2) selon une des revendications précédentes, **caractérisé en ce que** la buse de co-injection (2) est maintenue dans une plaque de maintien de buse (3) et est disposée par sa pointe (9) dans un évidement d'une plaque de moulage (1).

11. Dispositif de co-injection selon la revendication 10, **caractérisé en ce que** l'évidement de la plaque de moulage (1) limite partiellement le canal à coulée externe de forme annulaire (25) et qu'une embouchure de buse (30) est constituée dans la plaque de moulage (1).

12. Dispositif de co-injection selon une des revendications 10 à 11, **caractérisé en ce qu'**il présente une plaque de répartition de coulée (4) dotée d'une première conduite de coulée (7) et d'une seconde conduite de coulée (8), le premier canal d'acheminement de coulée (21) étant relié à la première conduite de coulée (7) et le second canal d'acheminement de coulée (22) à la seconde conduite de coulée (8).

13. Dispositif de co-injection selon une des revendications 10 à 11, **caractérisé en ce que** le pointeau de soupape (10) de la buse de co-injection (2) s'étend sans contact à travers un trou (4a) pratiqué dans la plaque de répartition de coulée (4) et est relié à un dispositif d'actionnement de pointeau de soupape (6).
